# EUROPÄISCHE PATENTSCHRIFT

(11) **EP 2 475 552 B1**
(45) Veröffentlichungstag und Bekanntmachung des Hinweises auf die Patenterteilung: **02.04.2014**
(21) Anmeldenummer: 10765939.3
(22) Anmeldetag: 09.09.2010
(51) Int. Cl.: B60R 13/02, B62D 1/06

(54) **LENKRAD**
STEERING WHEEL
VOLANT

(30) Priorität: 11.09.2009 DE 202009012301 U
(43) Veröffentlichungstag der Anmeldung: 18.07.2012
(73) Patentinhaber: TRW Automotive Safety Systems GmbH, 63743 Aschaffenburg (DE)
(72) Erfinder: LEDERER, Bernd, A-8071 Hausmannstätten (AT); KNEITINGER, Peter, 63762 Grossostheim (DE); BIEBER, Heiko, 63856 Bessenbach (DE); ADELBERGER, Maik, 63762 Grossostheim (DE); SCHMITZ, Markus, 41169 Mönchengladbach (DE); SCHULTE, Ulrich, 50996 Köln (DE)
(74) Vertreter: Mehnert, Bernhard
(86) Internationale Anmeldenummer: PCT/DE2010/001076
(87) Internationale Veröffentlichungsnummer: WO 2011/029437

(56) Entgegenhaltungen:
- WO-A1-2006/013029
- DE-U1- 29 902 044
- DE-U1-202004 015 234
- GB-A- 2 251 208

## Beschreibung

Die Erfindung betrifft ein Lenkrad mit einer Nabe, einem Lenkradkranz und wenigstens einer Nabe und Lenkradkranz verbindenden Speiche, wobei das Lenkrad ein Skelett, einen Formkörper und eine diesen zumindest teilweise nach außen hin abdeckende Außenhülle aufweisen.

Ein derartiges Lenkrad ist beispielsweise aus dem deutschen Gebrauchsmuster DE 1 982 842 U bekannt.

Des Weiteren offenbart Dokument WO 2006/013029 A1 die Präambel des Anspruchs 1.

Darin wird unter anderem vorgeschlagen, entlang des Lenkradkranzes Ausnehmungen in dem Formkörper auszubilden, die ein festes Halten des mit Leder überzogenen Formkörpers durch den Fahrer auch bei schnellen Lenkbewegungen gewährleisten sollen. Auch bei modernen Lederlenkrädern mit unterschiedlichen Oberflächenbeschichtungen kann es gelegentlich vorkommen, dass die Oberflächen von Lederlenkrädem als zu glatt empfunden werden.

Aufgabe der vorliegenden Erfindung ist es daher, ein Lenkrad zur Verfügung zu stellen, das die vorstehend genannten Nachteile des Standes der Technik vermeidet, und das eine verbesserte Griffigkeit bietet.

Die Aufgabe wird für ein Lenkrad der eingangs genannten Art dadurch gelöst, dass die Außenhülle zumindest abschnittsweise ein Gewebe aus einem Leder- und einem Fasermaterial aufweist.

Ein derartiges Lenkrad mit einem Gewebe aus mit einem Leder- und einem Fasermaterial schafft eine Oberfläche mit besonderer Struktur, die insbesondere eine gute Griffigkeit und Greifbarkeit aufweist. Die gewebte Außenhülle weist auch gute optische und haptische Eigenschaften auf, das heißt sie hat ein ansprechendes Aussehen und liefern dem Fahrzeuglenker ein angenehmes Berührungsempfinden.

Gemäß des erfindungsgemäßen Lenkrades weist das Gewebe eine erste Webfadenrichtung, insbesondere eine Kettfadenrichtung, mit ersten Webelementen auf, die aus einem Fasermaterial, insbesondere aus Fäden und/ oder Garnen, bestehen. Weiterhin weist das Gewebe eine zweite Webfadenrichtung, insbesondere eine Schussfadenrichtung, mit zweiten Webelementen auf, die aus Ledermaterial, insbesondere Ledersteifen, bestehen.

Durch die Kombination dieser beiden unterschiedlichen Materialien in einem Gewebe wird eine Oberfläche geschaffen, die einerseits eine gewisse Glätte für eine angenehmes Greif-Gefühl aufweist, andererseits eine gewisse Rauheit aufweist, um ein versehentliches Abgleiten sicher zu verhindern.

Dabei ist bevorzugt, dass das Gewebe zumindest abschnittsweise so an dem Lenkradkranz angeordnet ist, dass die erste Webfadenrichtung mit einer Axialrichtung des Lenkradkranzes ausgerichtet ist. Auch ist bevorzugt, dass das Gewebe zumindest abschnittsweise so an dem Lenkradkranz angeordnet ist, dass die zweite Webfadenrichtung mit einer Umfangsrichtung des Lenkradkranzes ausgerichtet ist.

Durch die bevorzugte Anordnung bietet das Gewebe eine verstärkte Rauheit bzw. einen größeren Widerstand bei einer Bewegung einer Hand eines Fahrzeugführers entlang der Umfangsrichtung des Lenkrades, also entlang der Axialrichtung des Lenkradkranzes. Eine entsprechend um 90° Grad gedrehte Anordnung ist jedoch ebenso denkbar wie eine Kombination unterschiedlich orientierter Anordnungen einzelner Abschnitte entlang des Lenkradkranzes bzw. an Oberflächen des Lenkrades. Insbesondere sind diagonal winkelige Anordnungen (z.B. 45° gedreht) denkbar.

In einer weiterhin bevorzugten Ausführungsform des erfindungsgemäßen Lenkrades weist das Gewebe in seiner ersten Webfadenrichtung ein System aus zumindest zwei, insbesondere genau zwei, Fäden oder Garnen auf. Weiterhin ist bevorzugt, dass das Gewebe in seiner zweiten Webfadenrichtung ein System aus genau einem Lederstreifen aufweist.

Hierdurch entsteht ein eine Gewebe, das von seinen jeweiligen Zellenabmessungen besonders gut geeignet ist, der speziellen Formgebung eines Lenkraden und seiner Elemente, z. B. Kranz, Speiche, Nabe angeschmiegt bzw. angepasst zu werden. Auch ergibt sich ein gefügiger optischer Eindruck. Denkbar sind jedoch insbesondere auch 3, 4 oder mehr Fäden oder Garne, insbesondere wenn breitere Lederstreifen Einsatz im Gewebe finden sollen.

Es ist bevorzugt, dass das Ledermaterial streifenförmig ausgebildet ist. Insbesondere soll das Ledermaterial verdrehungsfrei eingewebt sein.

Gemäß einer weiteren bevorzugten Ausführungsform weist das steifenförmige Ledermaterial, in Längsrichtung (bzw. im Querschnitt) gesehen, in einem Bereich seiner Ränder eine erste Dicke auf, die geringer ist, als eine zweite Dicke, die das steifenförmige Ledermaterial in einem mittleren, von den Rändern beabstandeten Bereich aufweist. Hierdurch ist es, insbesondere im Gegensatz zu einem im Querschnitt rechteckigen Lederstreifen möglich eine gefällige, im Wesentlichen glatt gewebte Oberfläche zu gestalten. Insbesondere werden erfindungsgemäß die zum Ausfransen tendierenden Ränder der Lederstreifen auf eine minimale Dicke reduziert, um so saubere Übergänge bei den sich kreuzenden Bahnen zu schaffen. Bevorzugt ist hierbei, dass der jeweilige Lederstreifen entlang seiner Längserstreckung im Bereich seiner Ränder so weit verdünnt wird, dass nur noch das Oberleder, das weniger zum Ausfransen neigt, verbleibt.

Es ist insbesondere bevorzugt, dass das steifenförmige Ledermaterial, in Längsrichtung (im Querschnitt) gesehen, an seiner Außenseite, in einem Bereich seiner Ränder eine Phase mit einem Phasenwinkel kleiner 80°, insbesondere kleiner 50°, vorzugsweise zwischen 20° und 40°, aufweist. Hierdurch, also durch ein anphasen bzw. abfräsen der Ränder kann ein Ausfransen der einzelnen Streifen zuverlässig verhindert werden.

Gemäß einer weiterhin bevorzugten Ausführungsform weist das Ledermaterial, in Längsrichtung (im Querschnitt) gesehen, einen im Wesentlichen trapezförmigen Querschnitt auf, wobei insbesondere eine Außenseite des Ledermaterials eine größte Breite (Basis) aufweist.

Gemäß einer weiteren bevorzugten Ausführungsform weist das Ledermaterial, in Längsrichtung (im Querschnitt) gesehen, einen im Wesentlichen kreissegmentförmigen Querschnitt auf, wobei insbesondere eine Innenseite des Ledermaterials bogenartig, insbesondere sinusförmig, gewölbt ausgebildet ist und die Außenseite die vorzugsweise ebene Basis bildet.

Gemäß einer weiteren bevorzugten Ausführungsform weist das Ledermaterial, in Längsrichtung (im Querschnitt) gesehen, einen im Wesentlichen linsenförmigen bzw. doppel-kreissegmentförmigen Querschnitt auf.

Durch die bevorzugten Ausbildungen der Querschnitte der Lederstreifen fügen sich diese in besonders günstiger Weise in die Gewebestruktur zwischen die Kettfäden ein, ohne raue Kanten an den Übergängen zu bilden. Indem die Stärke der Lederstreifen in deren Mitte am Größten ist, können diese Bereiche eine gute Umlenkung der Kettfäden im Gewebe ermöglichen. Auch behält der Lederstreifen die zum Weben erforderliche Reißfestigkeit bei.

Gemäß einer weiteren bevorzugten Ausführungsform weist das Leder- und das Fasermaterial die gleiche Farbe auf. Ein Abfärben zwischen den Materialien ist somit ausgeschlossen.

Gemäß einer anderen bevorzugten Ausführungsform weist das Leder- und das Fasermaterial voneinander abweichende Farben auf. Besondere Struktureffekte sind hierdurch darstellbar.

Gemäß einer weiteren bevorzugten Ausführungsform des erfindungsgemäßen Lenkrades bildet das Gewebe zumindest einen Teil der Außenhülle der Speiche. Bevorzugt ist auch, dass sich das Gewebe, vorzugsweise unterbrechungsfrei, auch über einen der Speiche benachbarten Abschnitt des Lenkradkranzes erstreckt.

Gemäß einer weiteren bevorzugten Ausführungsform weist eine Außenhülle des Lenkradkranzes im Wesentlichen vollständig das Gewebe auf.

Es ist bevorzugt, dass die Außenhülle, insbesondere die Außenhülle des Lenkradkranzes und/ oder der Speiche zumindest einen gewebefreien Abschnitt aufweist, wobei der gewebefreie Abschnitt insbesondere Holz- oder Holzdekorelemente aufweist. Hierdurch sind weitere besondere Gestaltungen denkbar.

Gemäß einer weiteren bevorzugten Ausführungsform weist das Lenkrad zwischen Außenhülle und Formkörper zumindest abschnittsweise eine Heiz- und/ oder Kühleinrichtung, insbesondere ein thermoelektrisches Element auf.

Hierdurch ist eine Temperierung des Lenkrades möglich.

Gemäß einem weiteren Aspekt umfasst die Erfindung ein gewebtes Innenraumdekor-element für ein Kraftfahrzeug, insbesondere für ein Lenkrad, wobei das Innenraumdekorelement ein Gewebe mit einem Fasermaterial in einer ersten Webfadenrichtung und einem Ledermaterial in einer zweiten Webfadenrichtung aufweist, das sich dadurch auszeichnet, dass das Gewebe zumindest eines der zuvor beschrieben Merkmale aufweist. Insbesondere zeichnet sich das erfindungsgemäße gewebte Innenraumdekorelement durch die zuvor beschriebene Gestaltung, insbesondere Kanten -, Rand- und Querschnittsgestaltung der verwebten Lederstreifen aus.

Gemäß einer bevorzugten Ausführungsform weist das gewebtes Innenraumdekorelement für ein Kraftfahrzeug, insbesondere für ein Lenkrad, ein Gewebe mit einem Fasermaterial in einer ersten Webfadenrichtung und einem Ledermaterial in einer zweiten Webfadenrichtung auf, wobei das Ledermaterial streifenförmig ausgebildet ist, und wobei die einzelnen Lederstreifen im Querschnitt Bereiche unterschiedlicher Dicke aufweisen, wobei die einzelnen Lederstreifen vorzugsweise in einem Bereich ihrer Ränder eine erste Dicke aufweisen, die geringer ist, als eine zweite Dicke in einem mittleren, von den Rändern beabstandeten Bereich.

Die Erfindung wird nachfolgend anhand bevorzugter Ausführungsformen mit weiteren Einzelheiten und Merkmalen unter Bezugnahme auf die angehängte Zeichnung ausführlich beschrieben. In der Zeichnung zeigt:
- Figur 1 eine schematische Ansicht eines erfindungsgemäßen Lenkrads;
- Figur 2 einen Schnitt durch das Lenkrad aus Figur 1 in Richtung der Linie II-II;
- Figur 3 eine Draufsicht auf einen Abschnitt des Lenkrades;
- Figur 4 eine Detailansicht der Figur 3, bei der die Gewebestruktur des erfindungsgemäßen Lenkrades bzw. des erfindungsgemäßen Dekorelementes, insbesondere für ein solches, erkennbar ist; und
- Figuren 5a bis 5d Querschnittsansichten unterschiedlicher Ausführungsformen von im erfindungsgemäßen Gewebe eingewebten Lederstreifen.

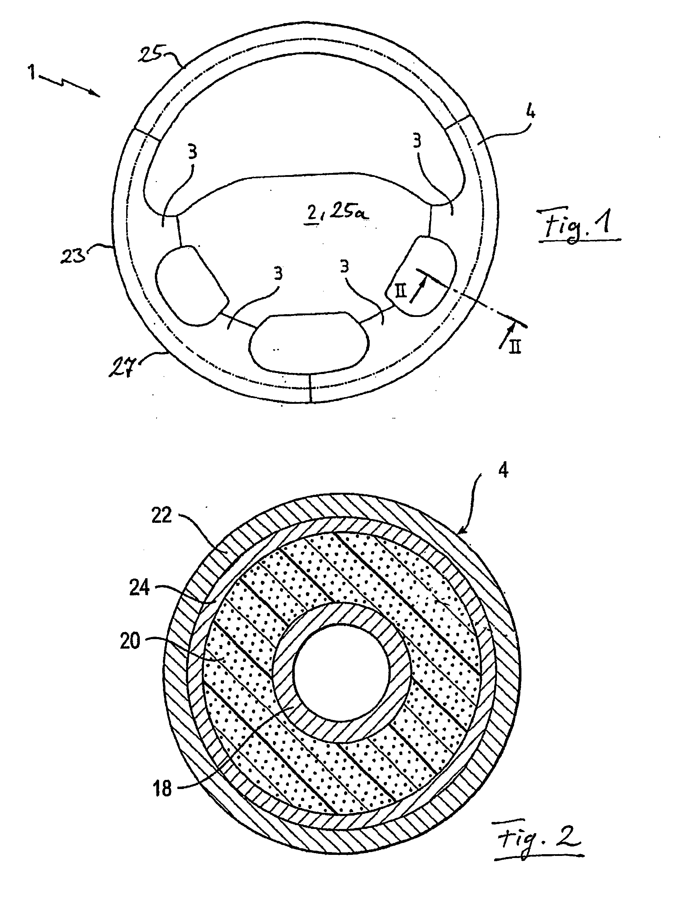

In Figur 1 ist schematisch ein Ausführungsbeispiel eines erfindungsgemäßen Lenkrades 1 dargestellt. Es weist eine Lenkradnabe 2, einen Lenkradkranz 4 sowie mehrere Speichen 3 auf.

In Figur 2 ist ein Querschnitt durch den Lenkradkranz 4 entlang der Linie II-II gezeigt. Der Lenkradkranz 4 weist ein Skelett 18 auf, das hier mit einem O-förmigen Querschnitt ausgeführt ist und aus einem Metall wie Magnesium oder Aluminium, oder einer Metalllegierung wie Stahl, einer Magnesiumlegierung oder Aluminiumlegierung bestehen kann.

Das Skelett 18 ist von einem Formkörper 20 umgeben. Der Formkörper kann durch Umschäumen oder Umspritzen des Skeletts mit einem Kunststoff oder aus Kunststoffschalen, die das Skelett umgeben, gebildet sein. Als Kunststoffe eignen sich Polyamid, Polyurethan, Polypropylen oder Polyethylen, aber auch alle kostengünstig erhältlichen Regranulate, Recyclingmaterialien und Kunststoffmahlgut.

Um den Formkörper 20 ist vorzugsweise ein Heiz- bzw. Kühlelement, insbesondere einthermoelektrisches Element 24 angeordnet. Das thermoelektrische Element 24 kann ein auf einen flexiblen Träger gedrucktes Peltier-Element sein; es kann sich aber auch um eine herkömmliche Heizmatte handeln.

An seiner Außenseite weist das Lenkrad 1 eine im Querschnitt II-II schematisch dargestellte und mit 22 bezeichnete Außenhülle 22 auf, die erfindungsgemäß besonders gute optische und haptische Eigenschaften, aber auch eine gute Wärmeleitfähigkeit besitzt. Die Außenhülle 22 liefert dem Fahrzeuglenker ein angenehmes Berührungsempfinden und kann durch ihre Struktureigenschaften eine besondere Griffigkeit schaffen.

Die Außenhülle 22 weist zumindest abschnittsweise ein Gewebe 23 auf, das zumindest Abschnitte des Lenkradkranzes 4, der Speichen 3 und7 oder der Nabe 2 bedeckt, wind in den Figuren 1 bis 3 gezeigt. Wie in Figur 1 dargestellt, kann ein Bereich 25, 25a der Außenhülle des Lenkrades andersartig, also nicht mit Gewebe 23 versehen sein. Bevorzugt ist, diese Bereiche 25, 25a der Außenhülle des Lenkrades mit Holz bzw. Holzdekor und/ oder Kunststoff zu gestalten.

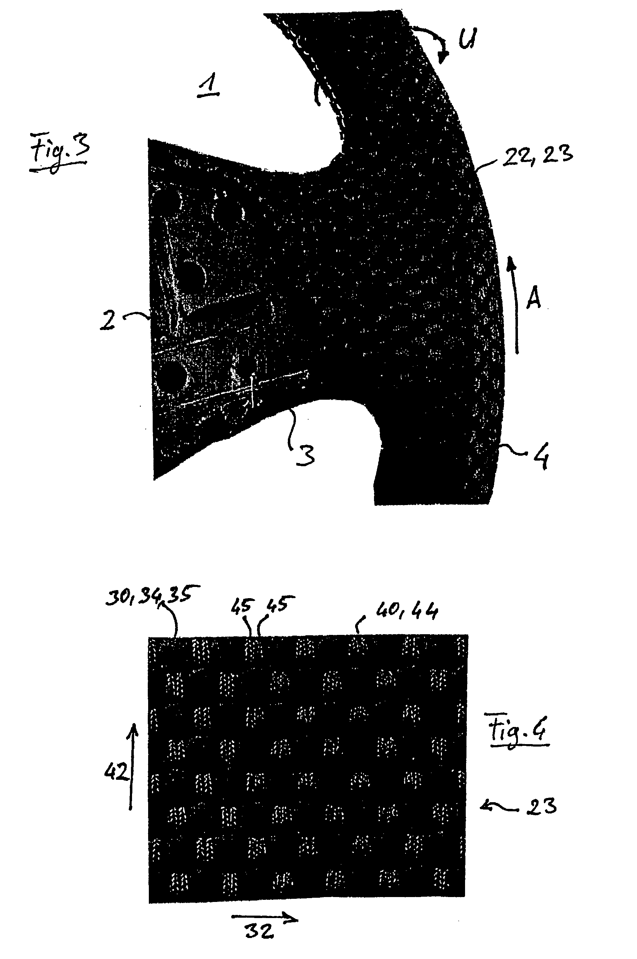

In der dargestellten Ausführungsform ist, wie in Figuren 3, 4 gezeigt, das Lenkrad 1 zumindest an einer Stelle seiner äußeren Oberfläche mit einem Gewebe bedeckt, das im Wesentlichen aus einem Ledermaterial 30 und einem Fasermaterial 40 besteht. Das Fasermaterial 40 umfasst vorzugsweise eine oder mehrere Natur- oder Kunstfasern, bzw. Fäden, Garne oder Zwirne, die aus einer Vielzahl von Einzelfasern zusammengefügt, insbesondere geflochten, gedreht oder gesponnen sind. In der gezeigten Ausführungsform bilden je zwei geflochtene Fädenstränge 45, 45 ein Webfadensystem, welches in Kettfadenrichtung 42 im Gewebe 23 angeordnet ist.

In Schußfadenrichtung 32 enthält das Gewebe 23 in der in Figuren 3, 4 gezeigten Ausführungsform ein Webfadensystem, das aus je einem einzelnen Lederstreifen 30, 35 besteht.

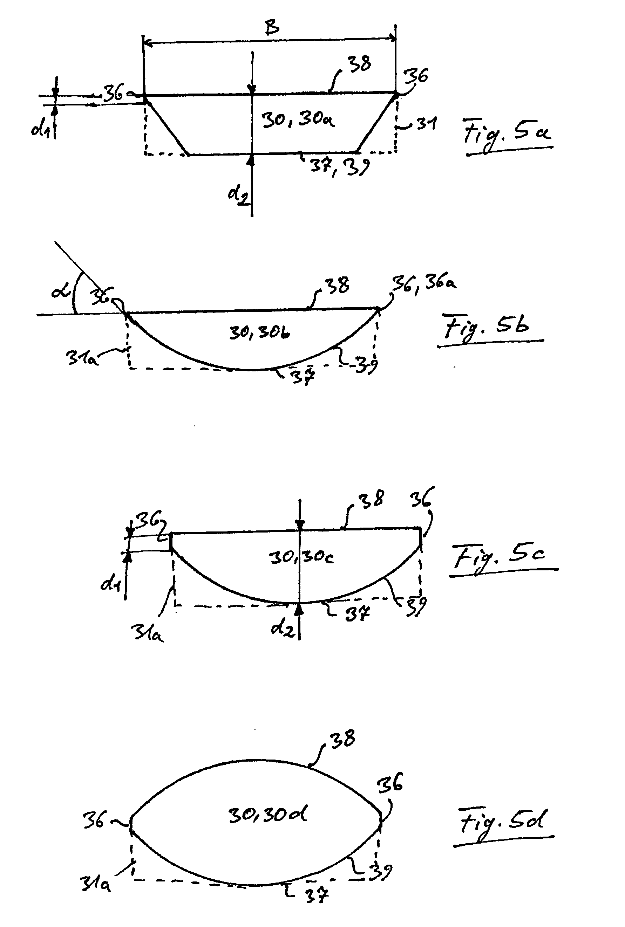

Bevorzugte Ausführungsformen 30a, 30b, 30c, 30d solcher Lederstreifen 30, 35 sind in den Figuren 5a bis 5d (in Längsrichtung gesehen bzw. im Querschnitt) dargestellt. Ein solcher Lederstreifen 30, 35 weist eine Außenseite 38 auf, die der Außenseite des natürlichen Leders entspricht, eine Innenseite 39, die der Innenseite oder Unterseite des natürlichen Leders entspricht. Insgesamt ist bevorzugt, wegen dessen besonderer haptischer und optischer Eigenschaften Naturleder einzusetzen. Hierbei kann Glattleder ebenso wie strukturgeprägtes, gebürstetes und/oder mit anderen Oberflächenbehandlungen versehenes Leder zum Einsatzkommen, Jedoch wäre auch denkbar, Kunstleder, z.B. Vlieskunstleder bzw. Alcantara zuverwenden.

Im Gegensatz zu herkömmlichen (rechteckigen) Lederstreifen weisen die erfindungsgemäßen Lederstreifen 30, 35 eine vom Rechteck abweichende Querschnittsform auf. Eine erste bevorzugte Ausführungsform ist in Fig. 5a dargestellt. Dieser Lederstreifen 30a weist einen im Wesentlichen trapezförmigen Querschnitt auf, wobei die größte Breite B (Basis des Trapezes) des Lederstreifens 5a an der Außenseite 38 zu finden ist. Die gegenüberliegende Lederinnenseite ist, vorzugsweise um ein Drittel, schmäler ausgebildet, indem die Stirnseiten des Lederstreifens 30a von der Außenseite 38 zur Innenseite 39 hin geneigt bzw. abgeschrägt (Winkel α, vergl. Fig. 5b) ausgebildet sind. Dies kann durch Entfernung z.B. durch Abschneiden bzw. Abhobeln oder Abschleifen der Eckbereiche 31 (in Strichliniendarstellung in Fig. 5a) geschehen. Hierbei kann die Entfernung der Eckbereiche 31 über eine gesamte Dicke d2 des Lederstreifens 30, 30a erfolgen, so dass eine exakte Trapezform entsteht. Es ist jedoch ebenso denkbar, nur einen (unteren) von der Außenseite 38 beabstandeten Eckbereich 31 zu entfernen, so dass angrenzend an die Außenseite 38 im Bereich der Kanten 36 des Lederstreifens ein Basisbereich mit einer Dicke d1 verbleibt, an den sich dann die Schrägseiten des Trapezes anschließen.

Jedenfalls ist die Dicke d1 deutlich kleiner als die Dicke d2, die der Lederstreifen in seiner Mitte 37 aufweist. Die Dicke d1 sollte so gewählt sein, dass die (die Dicke d1 aufweisenden) Kanten 36 nicht einreißen, jedoch sollte die Dicke d1 so gering gewählt werden, dass der Lederstreifen nicht ausfasert, also geringer als die Oberschicht des Leders.

Eine zweite bevorzugte Ausführungsform ist in Fig. 5b dargestellt. Dieser Lederstreifen 30b weist einen im Wesentlichen kreissegmentförmigen Querschnitt auf, wobei die größte Breite B (Basis des Kreissegmentes) des Lederstreifens 5b an der Außenseite 38 zu finden ist. Die gegenüberliegende Lederinnenseite 39 ist gebogen ausgebildet, wobei die Kanten 36 an den seitlichen Enden der Außenseite 38 (wie in Figur 5b gezeigt) spitzwinklig ausgebildet sein können.

Denkbar ist jedoch auch, dass angrenzend an die Außenseite 38 im Bereich der Kanten 36 des Lederstreifens ein Basisbereich mit einer Dicke d1 verbleibt, an den sich dann der Kreisbogen anschließt, wie anhand von Fig. 5a beschrieben und in Fig. 5c als weitere Ausführungsform eines Lederstreifens 30c gezeigt.

Der Bogen auf der Unterseite der Lederstreifen 30b, 30c, 30d kann kreisförmig sinusbogenartig oder anders konvex gekrümmt ausgebildet sein. Auch ist denkbar den Bogen durch eine Vieleck-Kettenlinie zu formen.

Die Ausbildung des Bogens auf der Innen- bzw. Unterseite der jeweiligen Lederstreifen 30b, 30c erfolgt durch entsprechendes Zurichten des Lederstreifens, insbesondere durch mechanischen Abtrag von Teilen 31 a der Unterseite des Ledersteifens, wie anhand der Bereiche 31 von Fig. 5a beschrieben wurde.

Eine vierte bevorzugte Ausführungsform ist in Fig. 5d dargestellt. Dieser Lederstreifen 30d weist einen im Wesentlichen einen doppel-kreissegmentförmigen Querschnitt auf, wobei die größte Breite B (Basis des Kreissegmentes) des Lederstreifens 5d zwischen den (spitzen oder abgeflachten) Kanten 36 zu finden ist. Hierbei ist die Außenseite 38 des Lederstreifens 30d derart gekrümmt, das eine erster Bogen entsteht. Die Lederinnenseite 39 ist ebenfalls bogenartig ausgebildet, wobei dieser Bogen der Innenseite durch mechanischen Abtrag von Teilen 31 a der Unterseite des Ledersteifens, wie anhand der Bereiche 31 von Fig. 5a beschrieben wurde, erfolgt. Die Kanten 36 an den seitlichen Enden der Außenseite 38 können flach oder auch (wie in Figur 5b gezeigt) spitzwinklig ausgebildet sein.

Die Dicke d2 des Lederstreifens 30, 35 beträgt zwischen 0,3 mm und 2,0 mm, vorzugsweise zwischen 0,7 mm und 1,7 mm, insbesondere zwischen 0,9 mm und 1,5 mm, im Ausführungsbeispiel 1,3 mm. Die Dicke bzw. der Durchmesser des Fasermaterials 40, 45 ist geringer als die Dicke des Lederstreifens 30, 35.

Insbesondere hierdurch ergibt sich ein Gewebe, bei dem die jeweiligen Leder- und Fasermaterialien in ihren jeweiligen Webfadenrichtungen in Wellenlinien angeordnet sind, wobei das Ledermaterial das Fasermaterial in der Gewebeanordnung in Dickenrichtung überragt.

Das Gewebe ist auf seiner Unterseite mit einem Bindungsmaterial, vorzugsweise einer Klebeschicht, insbesondere einer Heißklebeschicht versehen. Diese ist geeignet die die Gewebestruktur zu stabilisieren, auch dann, wenn das Gewebe auf die Besondere Oberfläche des Lenkrades aufgebracht wird. Gleichzeitig ist das Gewebe in alle Richtungen dehnbar genug, um sich an die in verschiedenen Raumrichtungen gegebenen Krümmungen des Lenkrades, insbesondere auch im Übergangsbereich zwischen Speichen 3 und Lenkradkranz 4 faltenfrei anzuschmiegen. Hierbei wird das Gewebe vorzugsweise derart auf zumindest einen Abschnitt 27 des Lenkradkranzes aufgebracht, insbesondere aufgeklebt, dass die erste Webfadenrichtung 42 des Fasermaterials 40 mit einer Axialrichtung A des Lenkradkranzes 4 ausgerichtet ist, das Fasermaterial also im wesentlichen parallel zum Skelett 18 des Lenkrades verläuft, wie in Figur 3 gezeigt.

Wie ebenfalls in Figur 3 gezeigt, ist die zweite Webfadenrichtung 32 der Lederstreifen 30, 35 mit einer Umfangsrichtung U des Lenkradkranzes 4 ausgerichtet, so dass die Lederstreifen das Skelett 18 zumindest kreisartig zumindest teilweise umrunden.

Während diese Ausrichtung eine besonders harmonische und faltenfreie Anpassung des Gewebes auf dem Lenkrad bietet, ist auch die Umgekehrte Ausrichtung bzw. eine dazu winkelige Ausrichtung denkbar. Insbesondere ist denkbar, dass sich das Gewebe vom Lenkradkranz, insbesondere unterbrechungsfrei bzw. in einem Stück auch über einen Bereich zumindest einer Speiche 3 des Lenkrades **1** erstreckt. Auch ist denkbar, Bereiche der Armaturentafel bzw. der Lenksäule und/ oder anderer Innenraumverkleidungen des Fahrzeuges, z. B. einen Gangschaltknauf mit dem erfindungsgemäßen Gewebe zu versehen.

## Patentansprüche

1. Lenkrad mit einer Nabe (2), einem Lenkradkranz (4) und wenigstens einer Nabe und Lenkradkranz verbindenden Speiche (3), wobei das Lenkrad (1) ein Skelett (18), einen Formkörper (20) und eine diesen zumindest teilweise nach außen hin abdeckende Außenhülle (22) aufweist, **wobei** die Außenhülle (22) zumindest abschnittsweise ein Gewebe (23) aus einem Ledermaterial (30) und einem Fasermaterial (40) aufweist, **dadurch gekennzeichnet, dass** das Gewebe (23) eine erste Webfadenrichtung (42), insbesondere eine Kettfadenrichtung, mit ersten Webelementen (44) aufweist, die aus einem Fasermaterial, insbesondere aus Fäden und/ oder Garnen (45), bestehen,
und / oder dadurch, dass das Gewebe (23) eine zweite Webfadenrichtung (32), insbesondere eine Schussfadenrichtung, mit zweiten Webelementen (34) aufweist, die aus Ledermaterial, insbesondere Ledersteifen (35), bestehen.

2. Lenkrad nach Anspruch 1, **dadurch gekennzeichnet, dass** das Gewebe (23) zumindest abschnittsweise so an dem Lenkradkranz (4) angeordnet ist, dass die erste Webfadenrichtung (42) mit einer Axialrichtung (A) des Lenkradkranzes (4) ausgerichtet ist.

3. Lenkrad nach einem der Ansprüche 1 oder 2, **dadurch gekennzeichnet, dass** das Gewebe (23) zumindest abschnittsweise so an dem Lenkradkranz (4) angeordnet ist, dass die zweite Webfadenrichtung (32) mit einer Umfangsrichtung (U) des Lenkradkranzes (4) ausgerichtet ist.

4. Lenkrad nach zumindest einem der Ansprüche 1 bis 3, **dadurch gekennzeichnet, dass** das Gewebe (23) in seiner ersten Webfadenrichtung (42) ein System aus zumindest zwei, insbesondere genau zwei, Fäden oder Garnen (45, 45) aufweist, und/ oder dass das Gewebe (23) in seiner zweiten Webfadenrichtung (32) ein System aus genau einem Lederstreifen (35) aufweist.

5. Lenkrad nach zumindest einem der Ansprüche 1 bis 4, **dadurch gekennzeichnet, dass** das Ledermaterial (30) streifenförmig ausgebildet und/ oder verdrehungsfrei eingewebt ist.

6. Lenkrad nach zumindest einem der Ansprüche 1 bis 5, **dadurch gekennzeichnet**
**dass** das strefenförmige Ledermaterial (30, 30a, 30b, 30c, 30d, 35), in Längsrichtung und/ oder Webrichtung (42) gesehen, in einem Bereich seiner Ränder (36)
eine erste Dicke (d1) aufweist, die geringer ist, als eine zweite Dicke (d2) in einem mittleren, von den Rändern beabstandeten Bereich (37).

7. Lenkrad nach zumindest einem der Ansprüche 1 bis 6, **dadurch gekennzeichnet, dass** das streifenförmige Ledermaterial (30, 30a, 30b, 30c, 30d, 35), an seiner Außenseite (38), in einem Bereich seiner Ränder (36) eine Phase (36a) mit einem Phasenwinkel (α) kleiner 80°, insbesondere kleiner 50°, vorzugsweise zwischen 20° und 40°, aufweist.

8. Lenkrad nach zumindest einem der Ansprüche 1 bis 7, **dadurch gekennzeichnet, dass** das Ledermaterial (30, 30a, 35), in Längsrichtung (42) gesehen, einen im Wesentlichen trapezförmigen Querschnitt aufweist, wobei das Ledermaterials vorzugsweise an seiner Außenseite (38) seine größte Breite (B) aufweist, oder dass das Ledermaterial (30, 30b, 35), in Längsrichtung gesehen, einen im Wesentlichen kreissegmentförmigen Querschnitt aufweist, wobei insbesondere eine Innenseite (39) des Ledermaterials bogenartig, insbesondere sinusförmig, gewölbt ausgebildet ist, oder
dass das Ledermaterial (30, 30d, 35), in Längsrichtung gesehen, einen im Wesentlichen linsenförmigen bzw. doppet-kreissegmentförmigen Querschnitt aufweist.

9. Lenkrad nach zumindest einem der Ansprüche 1 bis 8, **dadurch gekennzeichnet, dass** das Ledermaterial (30) und das Fasermaterial (40) die gleiche Farbe aufweisen.

10. Lenkrad nach zumindest einem der Ansprüche 1 bis 8, **dadurch gekennzeichnet, dass** das Ledermaterial (30) und das Fasermaterial (40) voneinander abweichende Farben aufweisen.

11. Lenkrad nach zumindest einem der Ansprüche 1 bis 10, **dadurch gekennzeichnet, dass** das Gewebe (23) zumindest einen Teil der Außenhülle (22) der Speiche (3) bildet; insbesondere dadurch, dass sich das Gewebe (23), vorzugsweise unterbrechungsfrei, auch über einen der Speiche (3) benachbarten Abschnitt des Lenkradkranzes (4) erstreckt.

12. Lenkrad nach zumindest einem der Ansprüche 1 bis 11, **dadurch gekennzeichnet, dass** die Außenhülle (22) des Lenkradkranzes (4) im Wesentlichen mit dem Gewebe (23) bedeckt ist, oder dadurch, dass die Außenhülle (22), Insbesondere die Außenhülle (22) des Lenkradkranzes (4), der Nabe (2) und/ oder der Speiche (3) zumindest einen gewebefreien Abschnitt (25, 25a) aufweist, wobei der gewebefreie Abschnitt vorzugsweise Holz- oder Holzdekorelemente aufweist.

13. Lenkrad nach einem der Ansprüche 1 bis 12, **dadurch gekennzeichnet, dass** das zwischen Außenhülle (22) und Formkörper (20) zumindest abschnittsweise eine Heiz- und/ oder Kühleinrichtung, insbesondere ein thermoelektrisches Element (24) angeordnet ist.

14. Gewebtes Innenraumdekorelement für ein Kraftfahrzeug, insbesondere für ein Lenkrad (1), wobei das Innenraumdekorelement ein Gewebe (23) mit einem Fasermaterial (40) in einer ersten Webfadenrichtung (42) und einem Ledermaterial (30) in einer zweiten Webfadenrichtung (32) aufweist, **dadurch gekennzeichnet, dass** das Gewebe (23) zumindest ein weiteres Merkmal zumindest eines Ansprüche 1 bis 13 aufweist.

15. Gewebtes Innenraumdekorelement für ein Kraftfahrzeug, insbesondere für ein Lenkrad (1), wobei das Innenraumdekorelement ein Gewebe (23) mit einem Fasermaterial (40) in einer ersten Webfadenrichtung (42) und einem Ledermaterial (30) in einer zweiten Webfadenrichtung (32) aufweist, **dadurch gekennzeichnet, dass** das Ledermaterial streifenförmig ausgebildet ist, wobei die einzelnen Lederstreifen im Querschnitt Bereiche unterschiedlicher Dicke aufweisen, wobei ein Lederstreifen vorzugsweise in einem Bereich der Ränder (36) eine erste Dicke (d1) aufweist, die geringer ist, als eine zweite Dicke (d2) in einem mittleren, von den Rändern beabstandeten Bereich (37).

## Claims

1. A steering wheel comprising a hub (2), a steering wheel rim (4) and at least one spoke (3) connecting the hub and the steering wheel rim, wherein the steering wheel (1) includes a skeleton (18), a molded padding (20) and an outer sheath (22) covering the latter at least partly to the outside, the outer sheath (22) at least in portions including a fabric (23) made of leather material (30) and fiber material (40), **characterized in that** the fabric (23) exhibits a first weaving thread direction (42), especially a warp thread direction, including first weaving elements (44) made of fiber material, especially of threads and/or yarns (45),
and/or **in that** the fabric (23) exhibits a second weaving thread direction (32), especially a weft thread direction, having second weaving elements (34) made of leather material, especially leather strips (35).

2. The steering wheel according to claim 1, **characterized in that** the fabric (23) is arranged at least in portions at the steering wheel rim (4) such that the first weaving thread direction (42) is aligned with an axial direction (A) of the steering wheel rim (4).

3. The steering wheel according to any one of the claims 1 or 2, **characterized in that** the fabric (23) is arranged at least in portions at the steering wheel rim (4) such that the second weaving thread direction (32) is aligned with a circumferential direction (U) of the steering wheel rim (4).

4. The steering wheel according to at least one of the claims 1 to 3, **characterized in that** in its first weaving thread direction (42) the fabric (23) includes a system of at least two, especially exactly two, threads or yarns (45, 45), and/or that in its second weaving thread direction (32) the fabric (23) includes a system of exactly one leather strip (35).

5. The steering wheel according to at least one of the claims 1 to 4, **characterized in that** the leather material (30) is strip-shaped and/or woven in torsion-free.

6. The steering wheel according to at least one of the claims 1 to 5, **characterized in that** the strip-shaped leather material (30, 30a, 30b, 30c, 30d, 35), viewed in the longitudinal direction and/or the weaving direction (42), in an area of its edges (36) has a first thickness (d1) which is smaller than a second thickness (d2) in a central area (37) spaced apart from the edges.

7. The steering wheel according to at least one of the claims 1 to 6, **characterized in that** the strip-shaped leather material (30, 30a, 30b, 30c, 30d, 35) has at its outside (38) in an area of its edges (36) a phase (36a) including a phase angle (α) smaller than 80°, especially smaller than 50°, preferably between 20° and 40°.

8. The steering wheel according to at least one of the claims 1 to 7, **characterized in that** the leather material (30, 30a, 35), viewed in the longitudinal direction (42), has a substantially trapezoidal cross-section, wherein the leather material has its largest width (B) preferably at its outside (38), or that the leather material (30, 30b, 35), viewed in the longitudinal direction, has a cross-section substantially in the form of a circle segment, wherein especially an inner side (39) of the leather material is curved to be arcuate, especially sinusoidal, or
**in that** the leather material (30, 30d, 35), viewed in the longitudinal direction, has a cross-section substantially in lens shape or in the shape of a double circle segment.

9. The steering wheel according to at least one of the claims 1 to 8, **characterized in that** the leather material (30) and the fiber material (40) have the same color.

10. The steering wheel according to at least one of the claims 1 to 8, **characterized in that** the leather material (30) and the fiber material (40) have colors different from each other.

11. The steering wheel according to at least one of the claims 1 to 10, **characterized in that** the fabric (23) forms at least part of the outer sheath (22) of the spoke (3); especially **in that** the fabric (23), preferably uninterrupted, also extends over a portion of the steering wheel rim (4) adjacent to the spoke (3).

12. The steering wheel according to at least one of the claims 1 to 11, **characterized in that** the outer sheath (22) of the steering wheel rim (4) is substantially covered with the fabric (23) or **in that** the outer sheath (22), especially the outer sheath (22) of the steering wheel rim (4), of the hub (2) and/or the spoke (3) has at least one portion (25, 25a) free of fabric, wherein the portion free of fabric preferably includes wood or wood decor elements.

13. The steering wheel according to any one of the claims 1 to 12, **characterized in that** a heating and/or cooling device, especially a thermoelectric element (24), is arranged at least in portions between the outer sheath (22) and the molded padding (20).

14. A woven interior decorating element for a motor vehicle, especially for a steering wheel (1), wherein the interior decor element comprises a fabric (23) including a fiber material (40) in a first weaving thread direction (42) and a leather material (30) in a second weaving thread direction (32), **characterized in that** the fabric (23) comprises at least one further feature of at least one of the claims 1 to 13.

15. A woven interior decorating element for a motor vehicle, especially for a steering wheel (1), wherein the interior decor element comprises a fabric (23) including a fiber material (40) in a first weaving thread direction (42) and a leather material (30) in a second weaving thread direction (32), **characterized in that** the leather material is strip-shaped, wherein the individual leather strips in cross-section have areas of different thickness, a leather strip having preferably in an area of the edges (36) a first thickness (d1) that is smaller than a second thickness (d2) in an central area (37) spaced apart from the edges.

## Revendications

1. Volant de direction avec un moyeu (2), une jante de volant (4) et au moins un moyeu relié aux branches (3) de la jante de volant, dans lequel le volant de direction (1) possède une armature (18), un surmoulage (20) et ce au moins partiellement recouvert extérieurement par une enveloppe extérieure (22), pour lequel l'enveloppe extérieure (22) comprend au moins et un tissu (23) fait en partie d'un matériau en cuir (30) et en partie d'un matériau en fibres (40), **caractérisé en ce que** le tissu (23) a une première direction de tissage (42) en particulier une direction de chaîne, avec des premiers éléments de tissage (44) qui sont constitués soit d'un matériau en fibres, en particulier fil ou multi-fils (45), et/ou **en ce que** le tissu (23) possède une seconde direction de tissage (32), en particulier une direction de trame, avec les deuxièmes éléments de tissage (34), constitué d'un matériau en cuir, en particulier de bandes de cuir (35).

2. Volant de direction selon la revendication 1, **caractérisé en ce que** le tissu (23) soit au moins en partie positionné par rapport à la jante du volant (4) de sorte que la première direction de tissage (42) est alignée selon une direction axiale (A) de la jante de volant (4).

3. Volant de direction selon l'une des revendications 1 ou 2, **caractérisé en ce que** le tissu soit au moins en partie positionné par rapport à la jante du volant (4) de sorte que la seconde direction de tissage (32) est alignée selon une direction circonférentielle (U) de la jante de volant (4).

4. Volant de direction selon au moins l'une des revendications 1 à 3, **caractérisé en ce que** le tissu (23) possède dans son premier sens de tissage (42) un système d'au moins deux, en particulier précisément deux, fils ou multi-fils (45, 45), et/ou que le tissu (23) possède dans son deuxième sens de tissage (32) un système d'exactement une bande de cuir.

5. Volant de direction selon au moins l'une des revendications 1 à 4, caractérisé en que le matériau en cuir (30) soit réalisé en forme de bande et/ou tissé sans torsion.

6. Volant de direction selon au moins l'une des revendications 1 à 5, **caractérisé en ce que** le matériau en cuir sous forme de bandes (30, 30a, 30b, 30c, 30d, 35), vu dans le sens longitudinal et/ou le sens de tissage (42), possède dans une zone de ses bords une première épaisseur (d1), qui est plus fine qu'une deuxième épaisseur (d2) qui se situe dans une zone centrale (37) espacée des bords.

7. Volant de direction selon au moins l'une des revendications 1 à 6, **caractérisé en ce que** le matériau en cuir (30, 30a, 30b, 30c, 30d, 35), possède, sur ses côtés extérieurs (38), dans la zone de ses bords (36) une phase (36a) avec un angle de phase (α) inférieur à 80°, en particulier inférieur à 50°, de préférence entre 20 et 40°.

8. Volant de direction selon au moins l'une des revendications 1 à 7, **caractérisé en ce que** le en cuir (30, 30a, 35), vu dans le sens longitudinal (42), possède une section transversale sensiblement de forme trapézoïdale, où le matériau en cuir possède de préférence sa plus grande largeur (B) en ses côtés extérieurs, où que le matériau en cuir (30, 30a, 35) possède, vu dans le sens longitudinal, une section transversale sensiblement en forme d'arc de cercle, où, en particulier un côté intérieur (39) du matériau en cuir est réalisé incurvé, en particulier de forme sinusoïdale, arqué, où
que le matériau en cuir (30, 30d, 35) possède, vu dans le sens longitudinal, une section transversale sensiblement lenticulaire ou plus précisément en forme de double arcs de cercle.

9. Volant de direction selon au moins l'une des revendications 1 à 8, **caractérisé en ce que** le matériau en cuir (30) et le matériau en fibres (40) possèdent la même couleur.

10. Volant de direction selon au moins l'une des revendications 1 à 8, **caractérisé en ce que** le matériau en cuir (30) et le matériau en fibres (40) sont de différentes couleurs l'un par rapport à l'autre.

11. Volant de direction selon au moins l'une des revendications 1 à 10, **caractérisé en ce que** le tissu (23) forme au moins une partie de l'enveloppe extérieure (22) des branches (3), en particulier **caractérisé en ce que**, le tissu (23) s'étend, de préférence sans interruption, aussi par dessus une partie des branches (3) au voisinage de la jante du volant (4) .

12. Volant de direction selon au moins l'une des revendications 1 à 11, **caractérisé en ce que** l'enveloppe extérieure (22) de la jante du volant (4) est couverte sensiblement avec le tissu (23), ou **caractérisé en ce que**, l'enveloppe extérieure (22) en particulier (22) de la jante du volant (4), du moyeu (2) et/ou des branches (3) possède au moins une partie (25, 25a) libre de tissu, où la section libre de tissu possède de préférence des éléments bois ou de décor en bois.

13. Volant de direction selon au moins l'une des revendications 1 à 12, **caractérisé en ce que** se trouve entre l'enveloppe extérieure (22) et le surmoulage (20) au moins partiellement un système de chauffage et/ou de réfrigération, en particulier un élément thermoélectrique (24).

14. Elément tissé d'habillage intérieur de véhicule, en particulier pour un volant de direction (1), où l'élément d'habillage intérieur possède un tissu (23) avec un matériau en fibres (40) dans un premier sens de tissage (42) et un matériau en cuir (30) dans un deuxième sens de tissage (32), **caractérisé en ce que** le tissu (23) possède au moins une autre caractéristique d'au moins une des revendications 1 à 13.

15. Elément tissé d'habillage intérieur de véhicule, en particulier pour un volant de direction (1), où l'élément d'habillage intérieur possède un tissu (23) avec un matériau en fibres (40) dans un premier sens de tissage (42) et un matériau en cuir (30) dans un deuxième sens de tissage (32), **caractérisé en ce que** le matériau en cuir est formé de bandes, où les seules bandes de cuir possèdent différentes épaisseurs en section transversale, où une bande de cuir possède de préférence dans la zone des bords (36) une première épaisseur (d1), qui est plus fine qu'une deuxième épaisseur (d2) dans une zone centrale (37) par rapport aux bords
